Europäisches Patentamt

European Patent Office

Office européen des brevets

(11) Veröffentlichungsnummer : **0 088 428**
B1

(12) # EUROPÄISCHE PATENTSCHRIFT

(45) Veröffentlichungstag der Patentschrift : 04.05.88

(51) Int. Cl.⁴ : **F 16 B 12/14**

(21) Anmeldenummer : 83102264.5

(22) Anmeldetag : 08.03.83

(54) Befestigungsplatte oder dergleichen für Möbelbeschlagteile.

(30) Priorität : 10.03.82 DE 3208643

(43) Veröffentlichungstag der Anmeldung :
14.09.83 Patentblatt 83/37

(45) Bekanntmachung des Hinweises auf die Patenterteilung : 04.05.88 Patentblatt 88/18

(84) Benannte Vertragsstaaten :
AT FR GB IT

(56) Entgegenhaltungen :
EP-A- 0 026 153
DD-A- 134 888
DE-A- 2 751 459
DE-A- 2 843 107
DE-B- 1 207 154
DE-B- 1 575 316
DE-B- 2 549 727
DE-U- 1 878 229
DE-U- 1 900 425
FR-A- 2 378 201

(73) Patentinhaber : Arturo Salice S.p.A.
Via Provinciale Novedratese 10
I-22060 Novedrate (Como) (IT)

(72) Erfinder : Der Erfinder hat auf seine Nennung verzichtet

(74) Vertreter : Lorenz, Eduard et al
Rechtsanwälte Lorenz, Eduard - Seidler, Bernhard
Seidler, Margrit - Gossel, Hans-K. Philipps, Ina, Dr.
Widenmayerstrasse 23
D-8000 München 22 (DE)

EP 0 088 428 B1

**Beschreibung**

Die Erfindung betrifft eine Befestigungsplatte für Möbelbeschlagteile mit Befestigungsdurchbrüchen nach dem Oberbegriff des Patentanspruchs 1.

Um dem Kunden preiswerte Möbel anbieten zu können, hat die Industrie in Kartons verpackte Möbelteile geschaffen, die der Kunde wegen ihrer handlichen Größe sofort mitnehmen kann, dann aber selbst montieren muß. Bei derartigen selbst aufzustellenden Möbeln spart der Kunde also die Transport- und Montagekosten. Um dem häufig ungeübten Käufer die Montage zu erleichtern oder überhaupt zu ermöglichen, sind den Möbelteilen Montageanleitungen beigepackt.

Dabei ist es bekannt, die Montage zusätzlich dadurch zu erleichtern, daß in die Befestigungsbohrungen von anzuschraubenden Möbelbeschlagteilen die zugehörigen Befestigungsschrauben bereits teilweise eingeschraubt sind. Dies hat den Vorteil, daß die Schrauben nicht verlorengehen können und dem Kunden bereits gezeigt wird, wo die Befestigungsschrauben einzudrehen sind.

Aus der DE-B-25 49 727 sowie der DE-A-27 51 459 sind beispielsweise aus Kunststoff oder Zinkdruckguß bestehende Möbelbeschlagteile bekannt, deren Befestigungsplatten oder -flansche mit Befestigungsbohrungen versehen sind, in die Befestigungsschrauben werksseitig so weit eingeschraubt sind, daß sie während des Versandes nicht verlorengehen können. Bestehen die Befestigungsplatten oder -flansche aus Kunststoff oder Zinkdruckgußteilen, weisen diese eine genügende Dicke auf, um den selbstschneidenden Befestigungsschrauben nach ihrem teilweisen Einschrauben einen ausreichenden Halt zu gewähren, so daß deren Herausfallen während des Versandes nicht zu befürchten ist. Das Einschrauben der Befestigungsschrauben in dickere Befestigungsplatten aus Kunststoff oder Druckguß erfordert jedoch einen beträchtlichen Kraftaufwand und verteuert die Herstellung. Bestehen die Befestigungsplatten oder -flansche der Möbelbeschlagteile beispielsweise aus gestanzten Blechteilen, ist eine Vormontage der Befestigungsschrauben wegen der üblicherweise nur gerinen Blechstärke überhaupt nicht möglich.

Aus der Veröffentlichung DE-B-12 07 154, von der im Oberbegriff des Patentanspruchs 1 ausgegangen wird, ist eine Anordnung zur unverlierbaren Halterung einer Schraube in einem aus einem weicheren Werkstoff als die Schraube bestehenden Bauteil bekannt, die darin besteht, daß in der Durchgangsbohrung für die Schraube in das Innere der Bohrung ragende zackenförmige Vorsprünge vorgesehen sind, in die die Schraube beim Eindrehen ein Gewinde einschneidet, daß das Gewinde beim Weiterdrehen der Schraube beim Anliegen des Schraubenkopfes an dem Bauteil im Bereich der Gewindegänge der Schraube weggequetscht wird und daß dann die in die letzten Gewindegänge der Schraube greifenden, im Bereich einer Hinterdrehung der Schraube stehenbleibenden Ansätze oder Vorsprünge als Sicherung gegen Verlieren dienen. Bei der bekannten Anordnung ist die Schraube angrenzend an ihrem Kopf mit einer Hinterdrehung versehen und die Schraube wird bereits bei ihrer Vormontage vollständig eingedreht, weil nur die Hinterdrehung der Sicherung dient.

Aufgabe der Erfindung ist es, eine Befestigungsplatte o. dgl. für Möbelbeschlagteile nach dem Oberbegriff des Patentanspruchs 1 zu schaffen, in deren Befestigungsdurchbrüchen sich zur Vormontage eingeschraubte Befestigungsschrauben sicher haltern lassen.

Erfindungsgemäß wird diese Aufgabe durch die kennzeichnenden Merkmale des Patentanspruchs 1 gelöst.

Bei der erfindungsgemäßen Befestigungsplatte bieten die beispielsweise durch eine Stanzung geschaffenen Einziehungen den Befestigungsschrauben nach ihrer Vormontage einen genügenden Halt und die Schneidarbeit bei der Vormontage der Befestigungsschrauben wird dadurch herabgesetzt, daß Gewindegänge nur in einen Teil der Einziehungen einzuschneiden sind.

In weiterer Ausgestaltung der Erfindung ist vorgesehen, daß die Befestigungsschrauben zwischen ihren Köpfen und den mit den Gewinden versehenen Teilen einen Schaft aufweisen, dessen Länge im wesentlichen der Höhe der Befestigungsplatte oder der gebördelten Ränder und dessen Durchmesser dem Durchmesser des Kreises entspricht, den die sehnenartigen Einziehungen berühren. Diese Ausgestaltung stellt sicher, daß nach Durchschrauben des mit dem Gewinde versehenen Teils der Befestigungsschrauben sich nur noch der Schraubenkopf spannend auf die Befestigungsplatte oder den Befestigungsflansch legt und dennoch eine gute Zentrierung dadurch erfolgt, daß die Einziehungen an dem Schaft anliegen und diesen zentrisch einfassen.

Um eine einfache Montage der Beschlagteile durch den Käufer der selbst zu montierenden Möbel zu ermöglichen, sind selbstverständlich auch die Korpusteile der Möbel vorgebohrt, um die Beschlagteile an den bezeichneten Stellen befestigen zu können. Die Bohrungen der Korpusteile weisen dabei einen Durchmesser auf, der dem Kerndurchmesser der Schraube, also dem Durchmesser des Zylinders entspricht, auf dem der Grund der Gewindeeinschnitte liegt.

Ein Ausführungsbeispiel der Erfindung wird nachstehend anhand der Zeichnung näher erläutert. In dieser zeigt

Fig. 1 eine Draufsicht auf ein topfförmiges Scharnierteil mit Befestigungsflansch,

Fig. 2 einen Querschnitt durch den Befestigungsflansch längs der Linie II-II in Fig. 1,

Fig. 3 einen Querschnitt durch den Befestigungsflansch mit vormontierter selbstschneidender Befestigungsschraube in vergrößerter Darstellung und

Fig. 4 einen Schnitt durch den Befestigungsflansch längs der Linie IV-IV in Fig. 3.

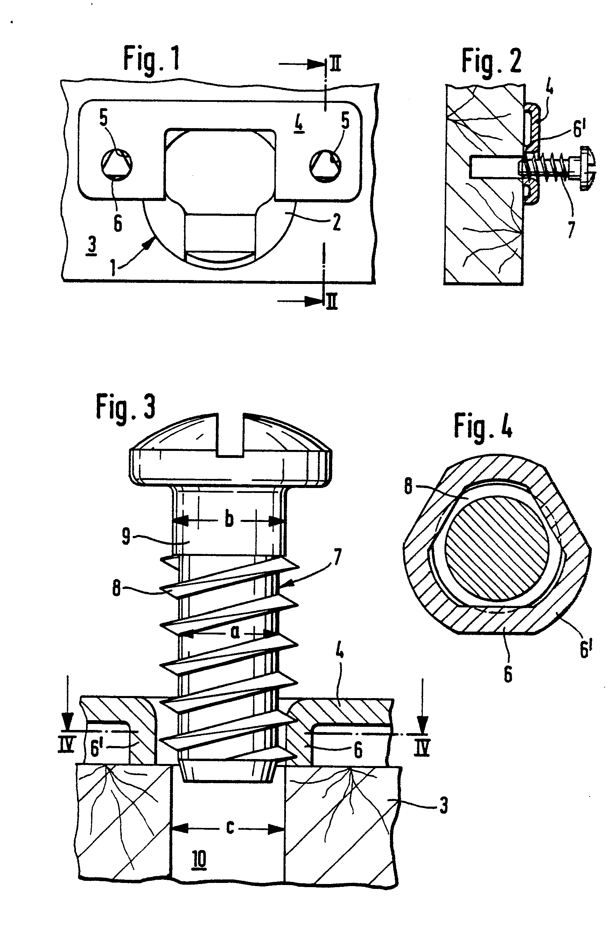

In Fig. 1 ist in Draufsicht ein aus Blech gestanztes Scharnierteil 1 gezeigt, dessen topfförmiges Teil 2 in eine Ausnehmung des Korpusteils 3 eingesetzt ist. Das Scharnierteil 1 ist mit einem Befestigungsflansch 4 versehen, das zwei Befestigungsbohrungen 5 aufweist. Die Wandungen der Befestigungsbohrungen sind in gleichmäßigen Abständen mit Einziehungen 6 versehen, deren inneren Seiten im Querschnitt durch sehnenartige Linien begrenzt sind. Die Einziehungen 6 sind gleichmäßig über den Umfang der Befestigungsbohrungen in der Weise verteilt, daß zwischen diesen zylindrische Wandungsteile der Befestigungsbohrungen 5 verbleiben.

Aus Fig. 2 ist ersichtlich, daß der Befestigungsflansch 4 und auch die Befestigungsbohrungen 5 mit gebördelten Rändern umgeben sind. In den durch die Bördelung kragenartig hochstehenden Rand 6' ist die selbstschneidende Befestigungsschraube 7 so weit eingeschraubt, daß deren vorderes Ende diesen gerade überragt.

Aus Fig. 3 ist ersichtlich, daß die Einziehungen 6 von dem Kerndurchmesser a der Schraube 7 einen so großen Abstand aufweisen, daß das Gewinde 8 mit sicherem Halt sich in die Einziehungen 6 einschneiden kann.

Oberhalb des mit dem Gewinde 8 versehenen Teils weist die Schraube 7 einen Schaft 9 auf, dessen Durchmesser b in etwa dem Durchmesser des Kreises entspricht, den im Querschnitt gesehen die Einziehungen 6 als Tangenten berühren.

In das Korpusteil 3 ist eine Bohrung 10 angebracht, deren Durchmesser c geringfügig größer ist als der Kerndurchmesser a der Schraube 7, so daß das Gewinde 8 der Schraube 7 sicher in die Wandungen der Bohrungen einschneiden kann und durch den Kern der Schraube keine Verdrängung von Material erfolgt.

Aus Fig. 4 ist ersichtlich, daß das selbstschneidende Gewinde 8 sich ausreichend tief in die Einziehungen 6 eingeschnitten hat und daß andererseits weder das Gewinde 8 die zylindrischen Teile der Befestigungsbohrung 5 berühren noch die Einziehungen 6 den Kern der Schraube 7.

**Patentansprüche**

1. Befestigungsplatte für Möbelbeschlagteile mit Befestigungsdurchbrüchen mit gewindefreien Bereichen ihrer Wandungen, in die Befestigungsschrauben eingesetzt sind, wobei die gewindefreien Bereiche der Befestigungsdurchbrüche (5) auf einem Kreisbogen liegen, wobei die Befestigungsdurchbrüche mit nach innen weisenden, im Abstand voneinander angeordneten Ansätzen versehen sind, die höchstens den Kern der Schraube berühren, und wobei die Gewinde der Schrauben die gewindefreien Bereiche der Wandungen der Befestigungsdurchbrüche höchstens gerade berühren, dadurch gekennzeichnet, daß die Befestigungsplatte (4) aus Blech besteht und die Wandungen der Befestigungsdurchbrüche (5) durch Bördeln gebildet sind und daß die Ansätze aus mindestens drei im Abstand voneinander angeordneten und durch Sehnen begrenzte Einziehungen (6) bestehen, die Kreisabschnitte bilden.

2. Befestigungsplatte nach Anspruch 1, dadurch gekennzeichnet, daß die Einziehungen (6) mit gleichen Abständen über den Umfang der Befestigungsdurchbrüche (5) verteilt sind.

3. Befestigungsplatte nach Anspruch 1 oder 2, dadurch gekennzeichnet, daß die Befestigungsschrauben (7) zwischen ihren Köpfen und ihren mit den Gewinden (8) versehenen Teilen Schäfte (9) aufweisen, deren Länge im wesentlichen der Höhe der gebörtelten Wandungen (6') und deren Durchmesser dem Durchmesser des Kreises entsprechen, den die sehnenartigen Einziehungen (6) berühren.

**Claims**

1. A fixing plate for fixture for furniture, which plate has fixing apertures defined by surfaces which have threadless portions, and is provided with fixing screws inserted into said portions, wherein the threadless portions of the fixing apertures (5) lie on an arc of a circle, the fixing apertures are provided with inwardly facing spaced apart protruding portions, which contact, at most, the core of the screw, and the threads of the screws are only in slight contact, at most, with the threadless portions of the surfaces defining the fixing apertures, characterized in that the fixing plate (4) consists of sheet metal, the surfaces of the fixing apertures (5) have been formed by beading, and the extensions consist of at least three spaced inwardly apart crimped portions (6), which are defined by chords and constitute segments of a circle.

2. A fixing plate according to claim 1, characterized in that the inwardly crimped portions (6) are equally spaced apart around the periphery of the fixing apertures (5).

3. A fixing plate according to claim 1 or 2, characterized in that the fixing screw (7) comprise shanks (9), which are disposed between the heads and those portions of the screws which are provided with screw threads (8), the length of said shanks substantially corresponds to the height of the beaded surfaces (6') and the diameter of said shanks corresponds to the diameter of the circle which is tangent to the chordlike inwardly crimped portions (6).

**Revendications**

1. Plaque de fixation pour élément de garniture pour meubles comportant des perçages de fixation avec des zones sans filet dans leurs parois dans lesquelles sont placées des vis de fixation, les zones sans filet des perçages de fixation (5) étant disposées en arc de cercle, les perçages de fixation étant pourvus d'épaulements dirigés vers l'intérieur et étant disposés de manière espacée, qui touchent tout au plus le noyau de la vis, les filets des vis ne touchant au maximum tout juste les zones sans filet des parois des perçages de fixation, caractérisée en ce que la plaque de fixation (4) consiste en une tôle et que les parois des perçages de fixation (5) sont formées par des bourrelets et que les épaulements consistent en retraits (6) délimités par des cordes qui forment des segments de cercle.

2. Plaque de fixation selon la revendication 1 caractérisée en ce que les retraits (6) sont répartis à distance égale sur la circonférence des perçages de fixation (5).

3. Plaque de fixation selon la revendication 1 ou 2, caractérisée en ce que les vis de fixation (7) possèdent entre leur tête et leur partie pourvue de filet (8) des tiges (9) dont la longueur correspond substantiellement à la hauteur des parois à bourrelet (6') et dont le diamètre correspond au diamètre du cercle que touchent les retraits (6) à la manière de segments.

0 088 428

Fig. 1

Fig. 2

Fig. 3

Fig. 4

1